## Europäisches Patentamt
## European Patent Office
## Office européen des brevets

(19)

(11) Numéro de publication: **0 025 207**
**B1**

(12)

# FASCICULE DE BREVET EUROPEEN

(45) Date de publication du fascicule du brevet:
04.04.84

(51) Int. Cl.³: **H 02 K 55/04,** H 02 K 3/46

(21) Numéro de dépôt: **80105235.8**

(22) Date de dépôt: **03.09.80**

(54) **Rotor supraconducteur.**

(30) Priorité: **10.09.79 FR 7922553**

(43) Date de publication de la demande:
**18.03.81 Bulletin 81/11**

(45) Mention de la délivrance du brevet:
**04.04.84 Bulletin 84/14**

(84) Etats contractants désignés:
**CH DE GB IT LI SE**

(56) Documents cités:
**FR - A - 2 240 558**
**FR - A - 2 274 158**

(73) Titulaire: **ALSTHOM-ATLANTIQUE Société anonyme dite:, 38, Avenue Kléber, F-75784 Paris Cedex 16 (FR)**
Titulaire: **ELECTRICITE DE FRANCE Service National, 2, rue Louis Murat, F-75008 Paris (FR)**

(72) Inventeur: **Gillet, Roger, 24, avenue d'Altkirch, F-90000 Belfort (FR)**

(74) Mandataire: **Weinmiller, Jürgen et al, Zeppelinstrasse 63, D-8000 München 80 (DE)**

## Rotor supraconducteur

L'invention concerne un rotor supraconducteur, ce rotor présentant généralement une symétrie de révolution autour de son axe longitudinal de rotation et comportant:

— un arbre rigide »chaud« dont une partie de la longueur présente la forme d'un tube,
— un inducteur »froid« incluant des enroulements supraconducteurs et s'étendant longitudinalement dans ledit tube,
— deux liaisons mécaniques disposées aux deux extrémités de cet inducteur et reliant chacune cet inducteur à l'arbre de manière à le supporter,
— des moyens de connexion électrique pour alimenter les enroulements de l'inducteur,
— et un circuit de refroidissement pour amener cet inducteur de la température ambiante à une température »cryogénique« mettant ces enroulements en état de supraconductivité.

Elle s'applique plus particulièrement à la construction d'un alternateur dont le rotor comporte des enroulements inducteurs »supraconducteurs«, c'est-à-dire constitués d'un matériau devenant supraconducteur lorsqu'il est refroidi à une température suffisamment basse souvent appelée »cryogénique« et valant par exemple 4 K. Le rotor comporte alors, outre ces enroulements et les moyens de connexion électrique nécessaire à leur alimentation, un circuit de refroidissement permettant de porter les enroulements de la température ambiante jusqu'à cette température cryogénique avant la mise en fonctionnement de l'alternateur et de les y maintenir ensuite. Ce circuit comporte une machine frigorifique, par exemple un liquéfacteur d'hélium. La puisance frigorifique nécessaire pour maintenir la supraconductivité, c'est-à-dire la puissance qu'il faut fournir à la machine frigorifique, est d'autant plus grande que la température qu'il faut atteindre est plus basse, et, pour une température donnée, elle est proportionelle aux pertes calorifiques, c'est-à-dire à la puissance calorifique qu'il faut évacuer.

Pour diminuer cette puissance on sépare le rotor en plusieurs zones

— une zone »chaude«, qui reste sensiblement à la température ambiante pendant le fonctionnement et qui comporte essentiellement l'arbre assurant la rigidité mécanique de l'ensemble du rotor tout en permettant sa rotation entre deux paliers,
— une zone »froide« que l'on peut appeler »inducteur« parce qu'elle comporte les enroulements et qui est portée en fonctionnement à la température cryogénique,
— et des éléments de transition thermique qui assurent la liaison mécanique entre l'arbre et l'inducteur, c'est-à-dire qui portent l'inducteur en s'appuyant sur des structures de support convenables faisant partie de l'arbre, la température de ces éléments en fonctionnement croissant d'une extrémité froide du côté de l'inducteur à une extrémité chaude du côté de la structure de support.

Les pertes calorifiques dues à la différence de température entre la zone froide et la zone voisine chaude résultent du rayonnement, et de la conduction, le vide évitant toute perte par convection. Les pertes les plus importantes sont dues à la conduction. Elles décroissent avec la résistance thermique entre les deux zones. On entend ici par »résistance thermique« d'un élément ayant une extrémité froide et une extrémité chaude, le rapport de la différence de température entre ces deux extrémités à la puissance calorifique allant de l'extrémité chaude à l'extrémité froide à travers l'élément. Cette résistance thermique peut être mesurée en degrés Kelvin par watt (K/W).

Lorsque des températures très basses telles que 4K doivent être maintenues dans des volumes importants la puissance frigorifique nécessaire devient très coûteuse et l'on cherche à augmenter la résistance thermique entre la zone refroidie et la zone non refroidie. On utilise pour cela des matériaux thermiquement isolant. Quant aux éléments de transition qui assurent la liaison mécanique entre ces zones on augmente leur résistance thermique en augmentant leur longueur et en diminuant leur section. Mais on ne peut atteindre ainsi une résistance thermique aussi grande qu'on le voudrait sans diminuer exagérément la résistance mécanique.

Pour obtenir à la fois des caractéristiques mécaniques convenables et un minimum de pertes on réalise l'arbre sous forme d'un tube rigide de grand diamètre entourant l'inducteur sans contact avec celui-ci, de deux flasques circulaires dont chacun obture une extrémité de ce tube et de deux bouts d'arbre creux de diamètre inférieur portant sur les paliers et faisant saillie exialement chacun au centre de l'un des flasques. Quant à l'inducteur il prend la forme d'un tambour étanche intérieur au tube rigide et se prolongeant, à chacune de ses extrémités, par un tube mince de même diamètre constituant un élément de transition thermique. Ce tube de transition vient s'appuyer sur une structure de support solidaire de l'arbre et située au voisinage du flasque. L'ensemble présente une structure de révolution autour de l'axe de rotation du rotor.

Le fait que l'inducteur subisse des variations de température très différentes de celle de l'arbre entraîne des déplacements longitudinaux des extrémités de cet inducteur par rapport aux structures de support, surtout au début et à la fin des périodes de maintien de l'inducteur en froid. Il est possible de faire supporter ces déplacements relatifs par une déformation élastique des structures de support. Mais ces structures doivent, de même que les tubes de transition thermique, pouvoir transmettre à l'inducteur la totalité du couple d'entraînement du rotor. L'utilisation d'une déformation élastique entraîne donc l'utilisation de pièces d'une dimension importante, qui augmentent sensiblement la masse et le coût du rotor.

On connaît par ailleurs, par le document FR-A-2 240 558, des modes de liaison entre arbre chaud et inducteur froid conçus pour permettre une dilatation longitudinale différentielle d'un cylindre par rapport à un autre cylindre coaxial. Ceci est obtenu par deux liaisons mécaniques reliant ces deux cylindres dans deux plans transversaux longitudinalement distants, l'une de ces deux liaisons autorisant en permanence un coulissement longitudinal avec transmission de couple. Cette disposition entraîne la présence de jeux mécaniques préjudiciables pendant le fonctionnement du rotor.

La présente invention a pour but d'assurer la liaison mécanique entre l'arbre chaud et l'inducteur froid, de manière à permettre de supporter sans dommages les contractions thermiques différentielles sans augmenter sensiblement le poids ou le coût du rotor et sans créer de jeux préjudiciables pendant la rotation du rotor en service.

Elle a pour objet un rotor supraconducteur, ce rotor présentant généralement une symétrie de révolution autour de son axe longitudinal de rotation et comportant:

— un arbre rigide »chaud« dont une partie de la longueur présente la forme d'un tube,
— un inducteur »froid« incluant des enroulements supraconducteurs et s'étendant longitudinalement dans ledit tube,
— deux liaisons mécaniques disposées aux deux extrémités de cet inducteur et reliant chacune cet inducteur à l'arbre de manière à le supporter,
— des moyens de connexion électrique pour alimenter les enroulements de l'inducteur,
— et un circuit de refroidissement pour amener cet inducteur de la température ambiante à une température »cryogénique« mettant ces enroulements en état de supraconductivité.

Ce rotor est caractérisé par le fait que l'une au moins desdites liaisons mécaniques entre inducteur froid et arbre chaud comporte:

— une couronne extérieure coaxiale au rotor et solidaire de l'un des éléments à relier,
— une couronne intérieure dilatable élastiquement, solidaire de l'autre des éléments à relier et disposée coaxialement contre la face intérieure de la couronne extérieure,
— et des masselottes réparties angulairement et fixées à la couronne intérieure de manière que la force centrifuge exercée sur ces masselottes par la rotation du rotor dilate la couronne intérieure et l'appuie contre la couronne extérieure pour assurer un blocage mutuel de ces deux couronnes pendant cette rotation tout en permettant leur déplacement longitudinal relatif en l'absence de cette rotation.

A l'aide des figures schématiques ci-jointes, on va décrire ci-après, à titre non limitatif, un exemple de réalisation d'un rotor selon l'invention.

La figure 1 représente une vue d'un rotor selon l'invention, en coupe par un plan passant par l'axe de ce rotor.

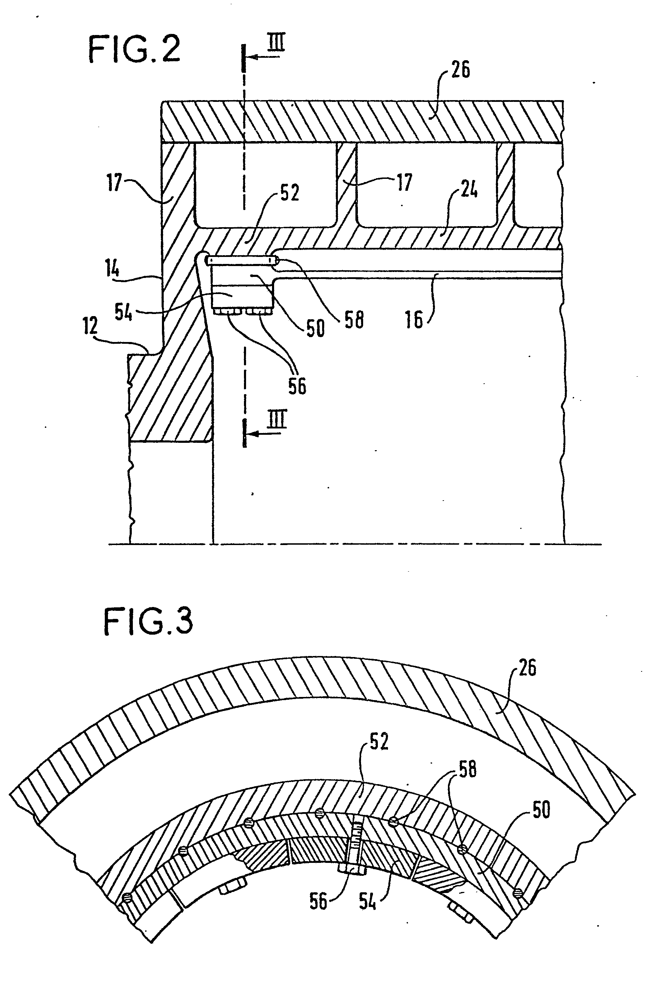

La figure 2 représente un détail de la figure 1.

La figure 3 représente une vue partielle du rotor des figures 1 et 2, en coupe par un plan III-III perpendiculaire à l'axe du rotor.

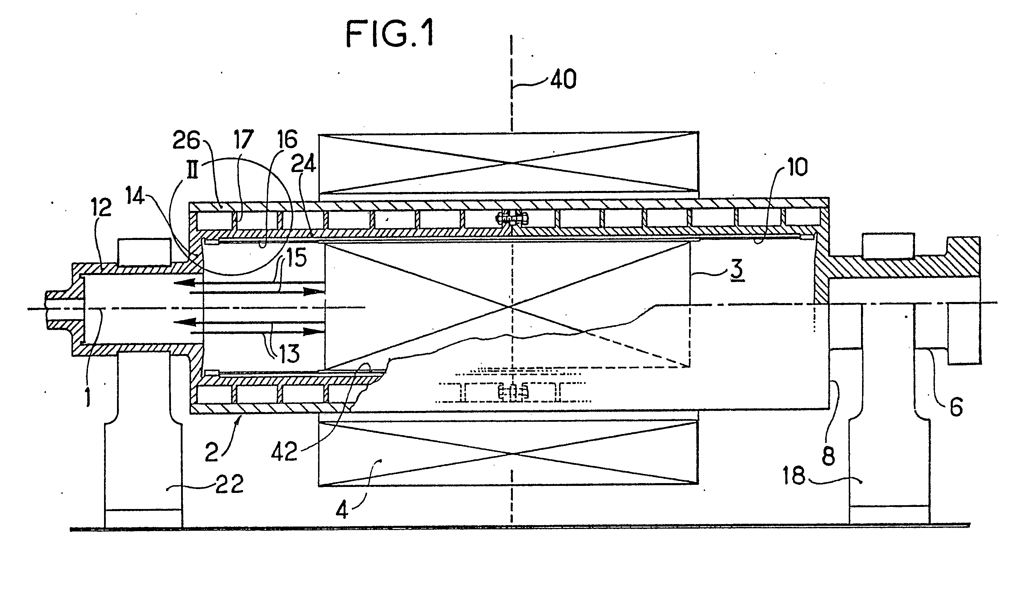

Le cryoalternateur comporte une turbine non représentée et située du côté droit de la figure 1. Celle-ci entraine un rotor 2 comportant un inducteur 3 refroidi à 4 K par de l'hélium, contenant des enroulements supraconducteurs et tournant autour d'un axe 1. L'alternateur comporte en outre un stator 4 formant induit autour du rotor 2, et constitué de conducteurs électriques normaux.

La partie centrale du rotor 2, est supportée et entrainée par deux bouts d'arbre horizontaux: un bout côté turbine, 6, raccordé à un flasque extérieur 8 plan circulaire, et un bout d'arbre côté »alimentation« 12 raccordé à un flasque extérieur 14.

Le bout 6 de l'arbre côté turbine est supporté par un palier 18 à température ordinaire. Il est en continuité mécanique avec l'arbre de la turbine non représentée.

Le bout 12 de l'arbre côté alimentation est creux et comporte, dans un évidement axial, des conduits 13 d'entrée et de sortie d'hélium, ces conduits étant raccordés par des joints tournants non représentés à un liquéfacteur d'hélium non représenté, de manière à permettre le refroidissement de l'inducteur à une température de 4 K. Le bout d'arbre 12 comporte d'autre part dans son évidement axial des conducteurs 15 pour l'alimentation électrique du rotor, et il est supporté par un palier 22 à température ordinaire.

Les flasques extérieurs 8 et 14 sont réunis par un tube rigide métallique 24 de forte épaisseur qui entoure l'inducteur 3 et des éléments de transition 10 et 16 consitutés de tubes métalliques minces de même diamètre que l'inducteur 3. Ces tubes de transition raccordent mécaniquement les deux extrémités de cet inducteur au tube rigide 24, au voisinage des flasques 8 et 14 respectivement. Le tube rigide 24 est à température ordinaire. Il est constitué en un alliage de titane muni de nervures circulaires extérieures 17 et recouvert extérieurement d'un écran amortisseur d'aluminium 26. Il assure la solidarisation mécanique des flasques 8 et 14 c'est-à-dire d'une part qu'il maintient l'alignement des bouts d'arbre 6 et 12, et d'autre part qu'il peut transmettre au flasque extérieur 14 du côté alimentation au moins la moitié du couple de rotation appliqué par la turbine non représentée. Il est d'autre part fixé de manière étanche aux flasques extérieurs 8 et 14 et l'espace intérieur est évacué de manière à assurer une bonne isolation thermique par le vide entre ce tube rigide 24 et l'inducteur 3.

L'arbre rigide constitué par les bouts d'arbre 6 et 12, les flasques 8 et 14 et le tube rigide 24 est réalisé en deux parties dont chacune est réalisée par soudage de divers éléments (un bout d'arbre, un flasque et tube rigide à demi-longueur) et est sitée d'un côté d'un plan transversal médian 40. Le matériau est un alliage non magnétique à fortes caractéristiques mécaniques tel que l'alliage de titane TA6V. Ces deux parties viennent entourer de part et d'autre l'inducteur 3 muni des tubes de transition 10 et 16, l'assemblage étant réalisé par boulons dans le plan médian 40. Cette position est favorable car il n'y apparaît pas de flexion circulaire importante comme aux extrémités.

L'écran amortisseur 26 est un tube obtenu par coulée centrifuge en alliage d'aluminium à faible résistivité électrique et à bonnes caractéristiques mécaniques. Il est monté à chaud sur les lignes de sommet des nervures 17 de manière à obtenir, par frettage résultant du refroidissement, un serrage énergique assurant la fixation de l'écran dans toutes les situations.

On va maintenant décrire les modes de liaison du tube de transition 16 étant entendu qu'ils sont les mêmes que ceux du tube 10. Côté froid cette liaison résulte du fait que ce tube est en continuité avec un tube extérieur 42 faisant partie de l'inducteur 3, et emmanché à chaud sur le corps de celui-ci de manière à réaliser un frettage, c'est-à-dire que les tubes 10 et 16 et ce tube extérieur 42 constituent une seule pièce tubulaire. Côté chaud la liaison se fait par un dispositif de liaison constitué essentiellement par une couronne intérieure 50 une couronne extérieure 52, et des masselottes 54, ces éléments ayant tous la même dimension longitudinale (c'est-à-dire parallèlement à l'axe du rotor), et étant en coïncidence quand l'inducteur est froid.

La couronne intérieure 50 est constituée par un épaississement de l'extrémité chaude du tube 16. Elle est suffisamment mince pour pouvoir se dilater sous l'action de la force centrifuge exercée par les masselottes 54 fixées sur sa face intérieure, chacune par deux vis 56 situées dans un même plan passant par l'axe 1 du rotor et le milieu de la masselotte. Ces masselottes se succèdent régulièrement sur toute la face interne de la couronne 50.

La couronne extérieure 52 fait partie de la »structure de support« précédemment mentionnée qui comporte en outre le flasque 14 et le tube 24. Elle est constituée par une partie de la longueur du tube rigide 24, avec une surépaisseur vers l'intérieur. Celle-ci doit en effet supporter sans dilatation sensible la plus grande partie de la force centrifuge résultant de la rotation des masselottes 54 et de la couronne intérieure 50.

En l'absence de rotation, donc de force centrifuge, ce dispositif de liaison permet un déplacement longitudinal relatif des deux couronnes. Quand la vitesse de rotation atteint sa valeur nominale, la force centrifuge applique la couronne intérieure contre la couronne extérieure avec une force qui assure un blocage efficace.

Pour empêcher une rotation relative des deux couronnes lorsque le rotor tourne à faible vitesse, un blocage angulaire est réalisé par des guides constitués par des goupilles cylindriques rondes longitudinales 58 insérées entre »cuir et chair« entre les deux couronnes. Ces goupilles contribuent également à la transmission du couple dans diverses circonstances. Leur nombre est par exemple double de celui des masselottes et elles sont régulièrement réparties angulairement, par exemple chacune à égale distance angulaire du milieu et du bord d'une masselotte.

La mise en froid de l'inducteur est effectuée à vitesse de rotation faible alors que la force centrifuge est négligeable.

Pendant ce temps les retraits peuvent avoir lieu par coulissement avec jeu minimum.

Par contre à la vitesse synchrone l'invention assure des liaisons fermes entre la partie froide et l'arbre pour empêcher toutes vibrations et transmettre les couples.

## Revendications

1. Rotor supraconducteur, ce rotor (2) présentant généralement une symétrie de révolution autour de son axe longitudinal de rotation (1) et comportant:

— un arbre rigide »chaud« (12, 14, 24, 8, 6) dont une partie de la longueur présente la forme d'un tube (24),
— un inducteur »froid« (3) incluant des enroulements supraconducteurs et s'étendant longitudinalement dans ledit tube (24),
— deux liaisons mécaniques (10, 16) disposées aux deux extrémités de cet inducteur et reliant chacune cet inducteur à l'arbre de manière à le supporter,
— des moyens de connexion électrique (15) pour alimenter les enroulements de l'inducteur,
— et un circuit de refroidissement (13) pour amener cet inducteur de la température ambiante à une température »cryogénique« mettant ces enroulements en état de supraconductivité,

caractérisé par le fait que l'une au moins (16) desdites liaisons mécaniques entre inducteur froid (3) et arbre chaud (14, 24, 52) comporte:

— une couronne extérieure (52) coaxiale au rotor (2) et solidaire de l'un des éléments à relier (14, 24),

— une couronne intérieure (50) dilatable élastiquement, solidaire de l'autre (16) des éléments à relier et disposée coaxialement contre la face intérieure de la couronne extérieure,

— et des masselottes (54) réparties angulairement et fixées à la couronne intérieure de manière que la force centrifuge exercée sur ces masselottes par la rotation du rotor dilate la couronne intérieure et l'appuie contre la couronne extérieure pour assurer un blocage mutuel de ces deux couronnes pendant cette rotation tout en permettant leur déplacement longitudinal relatif en l'absence de cette rotation.

2. Rotor selon la revendication 1, caractérisé par le fait qu'il comporte en outre des guides (58) disposés parallèlement à l'axe du rotor à l'interface entre les deux dites couronnes (50, 52) de manière à empêcher la rotation d'une couronne par rapport à l'autre même en l'absence de force centrifuge.

3. Rotor selon la revendication 2, caractérisé par le fait que lesdits guides (58) sont des clavettes rondes occupant deux sillons longitudinaux creusés en regard l'un de l'autre dans les faces en regard des deux couronnes (50, 52).

4. Rotor selon la revendication 2, dans lequel l'une au moins desdites liaisons mécaniques est un tube de transition (16) mince coaxial au rotor (2) et s'étendant entre une extrémité froide fixée à l'inducteur (3) et une extrémité chaude liée à une dite structure de support (52), caractérisé par le fait que cette extrémité chaude est fixée à ladite couronne intérieure (50) qui présente sensiblement le même diamètre que le tube des transition (16), ladite couronne extérieure (52) étant inclue dans ladite structure de support (14, 24, 52).

5. Rotor selon la revendication 2, caractérisé par le fait que chacune desdites masselottes (54) est fixée sur la face intérieure de ladite couronne intérieure (50) sur une zone angulairement médiane de la masselotte.

6. Rotor selon la revendication 5, caractérisé par le fait que chacune des masselottes (54) est fixée sur la face intérieure de la couronne intérieure (50) en plusieurs points situés dans un même plan passant par l'axe (1) du rotor et par le milieu de la masselotte.

7. Rotor selon la revendication 1, caractérisé par le fait que la couronne intérieure (50) est suffisamment mince pour pouvoir se dilater sensiblement sous l'action de la force centrifuge exercée par les masselottes (54) fixées sur sa face intérieure, alors que la couronne extérieure (52) est plus épaisse pour pouvoir supporter les forces centrifuges sans dilatation sensible.

**Patentansprüche**

1. Supraleiter-Rotor, mit einer allgemeinen Drehsymmetrie um die Längsachse (1) des Rotors (2) und mit

— einer starren »warmen« Welle (12, 14, 24, 8, 6), von der ein Längsabschnitt die Form eines Rohres (24) besitzt,

— einem »kalten« Induktor (3), der supraleitende Wicklungen umfaßt und sich längs in dem Rohr (24) erstreckt,

— zwei mechanischen Verbindungen (10, 16), die sich an den beiden Enden des Erregers befinden und diesen Induktor mit der Welle so verbinden, daß der Induktor getragen wird,

— elektrischen Anschlußmitteln (15) zur Stromversorgung der Induktorwicklungen

— und einem Kühlkreis (13), um den Induktor vor Umgebungstemperatur auf eine Kryotemperatur zu bringen, bei der die Wicklungen in den supraleitenden Zustand gelangen,

dadurch gekennzeichnet, daß mindestens eine (16) der mechanischen Verbindungen zwischen dem kalten Induktor (3) und der warmen Welle (14, 24, 52)

— eine zum Rotor (2) koaxiale und mit einem der zu verbindenden Elemente (14, 24) fest verbundene äußere Krone (52),

— eine elastisch dehnbare, mit dem anderen der zu verbindenden Elemente (16) fest verbundene innere Krone (50), die koaxial gegen die Innenseite der äußeren Krone anliegt,

— und Beschwerungsstücke (54) aufweist, die winkelmäßig verteilt sind und an der inneren Krone befestigt sind derart, daß die Zentrifugalkraft, die auf diese Beschwerungsstükke durch die Rotordrehung ausgeübt werden, die innere Krone aufweitet und gegen die äußere Krone drückt, um die gegenseitige Blockierung dieser beiden Kronen während der Drehung zu sichern und zugleich ihre relative Längsverschiebung bei Abwesenheit der Drehung zu ermöglichen.

2. Rotor nach Anspruch 1, dadurch gekennzeichnet, daß er außerdem Führungsglieder (58) aufweist, die parallel zur Rotorachse zwischen den beiden Kronen (50, 52) liegen derart, daß die Drehung einer Krone bezüglich der anderen selbst bei abwesender Zentrifugalkraft verhindert wird.

3. Rotor nach Anspruch 2, dadurch gekennzeichnet, daß die Führungsglieder (58) als runde Pflöcke ausgebildet sind, die zwei Längsrillen besetzen, die einander gegenüber in die einander zugewandten Flächen der beiden Kronen (50, 52) eingeschnitten sind.

4. Rotor nach Anspruch 2, in dem mindestens eine der mechanischen Verbindungen ein dünnes zum Rotor (2) koaxiales Übergangsrohr (16) ist, das sich zwischen einem am Induktor (3) befestigten kalten Ende und einem an einer sogenannten Tragestruktur (52) befestigten warmen Ende erstreckt, dadurch gekennzeichnet, daß dieses warme Ende an der inneren Krone (50), die im wesentlichen denselben Durchmesser wie das Übergangsrohr (16) aufweist, befestigt ist, während die äußere Krone (52) in der Tragestruktur (14, 24, 52) eingeschlossen ist.

5. Rotor nach Anspruch 2, dadurch gekennzeichnet, daß jedes Beschwerungsstück (54) auf der Innenfläche der inneren Krone (50) in einer winkelmäßig mittleren Zone des Stücks befestigt ist.

6. Rotor nach Anspruch 5, dadurch gekennzeichnet, daß jedes Beschwerungsstück (54) auf der Innenfläche der inneren Krone (50) an mehreren Punkten befestigt ist, die in einer gemeinsamen durch die Rotorachse (1) und durch die Mitte des Stücks verlaufenden Ebene liegen.

7. Rotor nach Anspruch 1, dadurch gekennzeichnet, daß die innere Krone (50) hinreichend dünn ist, um sich unter Einfluß der von den auf ihrer Innenseite befestigten Beschwerungsstücken ausgeübten Zentrifugalkraft nennenswert ausdehnen zu können, während die äußere Krone (52) dicker ist, um die Zentrifugalkräfte ohne nennenswerte Ausdehnung abfangen zu können.

**Claims**

1. A superconducting rotor, said rotor (2) being generally symmetrical about its longitudinal axis (1) of rotation and including:

— a »hot« rigid shaft (12, 14, 24, 8, 6), a longitudinal part (24) of which is tube-shaped,
— a »cold« inductor (3) including superconducting windings and extending longitudinally in said tube (24),
— two mechanical connections (10, 16) disposed on both ends of that inductor and each connecting that inductor to the shaft in a way as to bear ist,
— electrical connection means (15) for feeding power to the windings of the inductor, and
— a cooling circuit (13) for cooling down the inductor from ambient temperature to a cryogenic temperature, thus placing these windings in a superconducting state,

characterized in that at least one (16) of said mechanical connections between the cold inductor (3) and the hot shaft (14, 24, 52) includes

— an outer ring (52) which is coaxial with the rotor (2) and integral with one of the two parts (14, 24) to be connected,
— an elastically extensible inner ring (50) which is integral with the other (16) of said two parts to be connected and is disposed coaxially against the inner surface of the outer ring,
— and fly-weights (54) spaced out angularly and fixed to the inner ring so that the centrifugal force exerted on the fly-weights by rotation of the rotor expands the inner ring and presses it against the outer ring to lock these two rings together during rotation while allowing relative longitudinal movement thereof when there is no rotation.

2. A rotor according to claim 1, characterized in that it further includes guides (58) disposed parallel to the axis of the rotor at the interface between said two rings (50, 53) to prevent rotation of one ring relative to the other even when there is no centrifugal force.

3. A rotor according to claim 2, characterized in that said guides (58) are round keys which occupy two longitudinal keyways which are cut in a face to face disposition into the adjacent surfaces of the two rings (50, 52).

4. A rotor according to claim 2, in which at least one of said mechanical connections comprises a thin transition tube (16) which is coaxial with the rotor (2) and extends between a cold end fixed to the inductor (3) and a hot end connected to a said support structure (52), characterized in that said hot end is fixed to said inner ring (50) whose diameter is substantially the same as that of the transition tube (16), said outer ring (52) being included in said support structure (14, 24, 52).

5. A rotor according to claim 2, characterized in that each of said fly-weights (54) is fixed on the inner surface of said inner ring (50) over an angularly central zone of the fly-weight.

6. A rotor according to claim 5, characterized in that each of the fly-weights (54) is fixed on the inner surface of the inner ring (50) at a plurality of axially separated points situated in one plane which passes through the rotor axis (1) and through the center line of the fly-weight.

7. A rotor according to claim 1, characterized in that the inner ring (50) is sufficiently thin so as to expand substantially under the effect of the centrifugal force exerted by the fly-weights (54) fixed on its inner surface, while the outer ring (52) is thicker and adapted to bear the centrifugal forces without any appreciable expansion.

FIG.1

FIG.2

FIG.3